# EUROPEAN PATENT APPLICATION

(11) **EP 4 144 878 A1**
(43) Date of publication of application: **08.03.2023**
(21) Application number: 21822265.1
(22) Date of filing: 19.03.2021
(51) Int. Cl.: C22C 21/00, B23K 35/22, B23K 35/28

(54) **ALUMINUM ALLOY BRAZING SHEET AND ALUMINUM ALLOY BRAZED BODY**

(30) Priority: 08.06.2020 JP 2020099534
(71) Applicant: KABUSHIKI KAISHA KOBE SEIKO SHO (KOBE STEEL, LTD.), Hyogo 651-8585 (JP)
(72) Inventor: MATSUKADO, Katsuhiro, Moka-shi Tochigi 321-4367 (JP); TSURUNO, Akihiro, Moka-shi Tochigi 321-4367 (JP); SHIBUYA, Yuji, Moka-shi Tochigi 321-4367 (JP); UCHIDA, Yousuke, Kariya-shi Aichi 448-8661 (JP); SAJI, Atsushi, Kariya-shi Aichi 448-8661 (JP)
(74) Representative: Müller-Boré & Partner Patentanwälte PartG mbB
(86) International application number: PCT/JP2021/011503
(87) International publication number: WO 2021/250972

(57) **Abstract**

Provided are: an aluminum alloy brazing sheet capable of exhibiting excellent corrosion resistance; and an aluminum alloy brazed body. An aluminum alloy brazing sheet (10) comprising a core material (1), an intermediate material (2), and a brazing material (3), wherein the core material (1) contains 0.20-2.00 mass% of Mn, 0.20-1.50 mass% of Si, 0.20-1.50 mass% of Cu, and 0.10-0.90 mass% of Mg, the intermediate material (2) contains 0.50-8.00 mass% of Zn and 0.10-0.90 mass% of Mg, the brazing material (3) contains 5.00-15.00 mass% of Si, 0.10-0.90 mass% of Mg, 0.10-0.50 mass% of Bi, and 0.05-0.50 mass% of Cu, and a relational formula 10.0≤[Zn]/[Cu]≤40.0 is satisfied.

## Description

### TECHNICAL FIELD

The present invention relates to an aluminum alloy brazing sheet and an aluminum alloy brazed body, and more particularly, to an aluminum alloy brazing sheet used in a heat exchanger for an automobile or the like.

### BACKGROUND ART

Among methods for brazing aluminum-alloy members for, for example, a heat exchanger, there is a method called vacuum brazing, in which the members are brazed in a vacuum without using a flux.

Compared to flux brazing in which a flux is used, the vacuum brazing has various merits including no need of applying a flux and prevention from problems caused by improper flux application amounts.

However, since vacuum brazing necessitates an expensive vacuum furnace for performing heating while keeping the inside of the furnace vacuum during brazing, an operation cost is increased. In addition, it is difficult to control the inside of the evacuated furnace and thus the operation becomes more difficult.

In order to overcome such problems, investigations have been made on flux-less brazing in which brazing is performed in a non-vacuum atmosphere without using a flux, and the following technique has been proposed.

Specifically, Patent Literature 1 discloses a method for flux-less brazing of an aluminum material, in which use is made of an aluminum-clad material including an Al-Si brazing filler material containing 0.1 to 5.0 mass% of Mg and 3 to 13 mass% of Si as an outermost surface layer. In this method, close-contact portions between the aluminum-clad material and a member to be brazed are bonded using the Al-Si brazing filler material at a heating temperature of 559°C to 620°C in a non-oxidizing atmosphere involving no depressurization.

### CITATION LIST

### PATENT LITERATURE

Patent Literature 1: JP-A-2010-247209

### SUMMARY OF INVENTION

### TECHNICAL PROBLEM

The technique according to Patent Literature 1 is a technique concerning flux-less brazing performed in a non-vacuum inert gas atmosphere, and Patent Literature 1 states that given effects are obtained.

However, such flux-less brazing is more susceptible to corrosion than flux brazing, and it cannot be said that corrosion resistance related to flux brazing has been sufficiently studied. Therefore, the present inventors have studied not only the corrosion resistance of a single plate in a case where heating for brazing is performed assuming a portion where a fin is not disposed, hereinafter referred to as "single-plate portion corrosion resistance", but also the corrosion resistance of a fillet portion formed during application of heating for brazing in a state of disposing a fin, hereinafter referred to as "fillet portion corrosion resistance", and have considered that the corrosion resistance of an aluminum alloy brazing sheet used for flux-less brazing needs to be aimed at a higher level.

Accordingly, an object of the present invention is to provide an aluminum alloy brazing sheet and an aluminum alloy brazed body that can exhibit excellent corrosion resistance (compatibility between single-plate portion corrosion resistance and fillet portion corrosion resistance).

### SOLUTION TO PROBLEM

The present inventors have focused on components of an aluminum alloy brazing sheet, and have intensively studied effects of components on the above-described problems.

As a result, the present inventors have found that excellent corrosion resistance can be exhibited by precisely adjusting a content of Cu in a brazing filler material and a content of Zn in an intermediate material.

That is, an aluminum alloy brazing sheet according to the present invention includes a core material, a brazing filler material provided on one surface of the core material, and an intermediate material provided between the core material and the brazing filler material, in which the core material contains Mn: 0.20 mass% or more and 2.00 mass% or less, Si: 0.20 mass% or more and 1.50 mass% or less, Cu: 0.20 mass% or more and 1.50 mass% or less, and Mg: 0.10 mass% or more and 0.90 mass% or less, with the remainder being Al and unavoidable impurities, the intermediate material contains Zn: 0.50 mass% or more and 8.00 mass% or less, Mg: 0.10 mass% or more and 0.90 mass% or less, with the remainder being Al and unavoidable impurities, the brazing filler material contains Si: 5.00 mass% or more and 15.00 mass% or less, Mg: 0.10 mass% or more and 0.90 mass% or less, Bi: 0.10 mass% or more and 0.50 mass% or less, Cu: 0.05 mass% or more and 0.50 mass% or less, with the remainder being Al and unavoidable impurities, and a relational expression of 10.0 ≤ [Zn]/[Cu] ≤ 40.0 is satisfied in which [Zn] is the content of Zn in the intermediate material in mass%, and [Cu] is the content of Cu in the brazing filler material in mass%.

The aluminum alloy brazed body according to the present invention is obtained by brazing the aluminum alloy brazing sheet.

### ADVANTAGEOUS EFFECTS OF INVENTION

The aluminum alloy brazing sheet according to the present invention can exhibit excellent corrosion resistance.

The aluminum alloy brazed body according to the present invention can exhibit excellent corrosion resistance.

### BRIEF DESCRIPTION OF DRAWINGS

[FIG. 1] FIG. 1 is a cross-sectional view of an aluminum alloy brazing sheet according to an embodiment of the present invention.
[FIG. 2] FIG. 2 is a view for illustrating a test of evaluation of fillet portion corrosion resistance, and is a perspective view of a state in which fins are combined with a specimen.
[FIG. 3A] FIG. 3A is a photograph of a specimen 5 in the evaluation of fillet portion corrosion resistance, and shows a result of no unstacking at the fillet portion.
[FIG. 3B] FIG. 3B is a photograph of a specimen 2 in the evaluation of fillet portion corrosion resistance, and shows a result of unstacking of a part of the fillet portion.
[FIG. 3C] FIG. 3C is a photograph of a specimen 7 in the evaluation of fillet portion corrosion resistance, and shows a result of unstacking of the entire fillet portion.

### DESCRIPTION OF EMBODIMENTS

Hereinafter, modes for providing an aluminum alloy brazing sheet (hereinafter, referred to as a brazing sheet as appropriate) according to the present invention will be described with reference to the drawings as appropriate.

### [Aluminum Alloy Brazing Sheet]

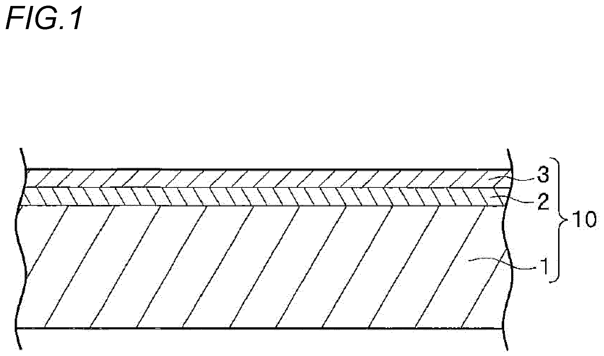

As illustrated in FIG. 1, the brazing sheet in the present embodiment includes a core material 1, a brazing filler material 3 provided on one surface of the core material 1, and an intermediate material 2 provided between the core material 1 and the brazing filler material 3. In a brazing sheet 10 in the present embodiment, the contents of components of the core material 1, the intermediate material 2, and the brazing filler material 3 are specified. Hereinafter, the reason why the components of the core material, the intermediate material, and the brazing filler material of the brazing sheet in the present embodiment are numerically limited will be described in detail.

### [Core Material]

The core material of the brazing sheet in the present embodiment contains Mn, Si, Cu, and Mg, with the remainder being Al and unavoidable impurities.

The core material of the brazing sheet in the present embodiment may contain one or more of Ti, Cr, and Zr.

### (Mn in Core Material: 0.20 mass% or More and 2.00 mass% or Less)

Mn improves post-brazing strength by being dissolved in a base metal or forming an Al-Mn-Si intermetallic compound together with Si. In the case where the content of Mn is less than 0.20 mass%, the effect of improving the strength is small. Meanwhile, when the content of Mn exceeds 2.00 mass%, the coarse intermetallic compound is precipitated, and the rollability deteriorates, which makes it difficult to produce a brazing sheet.

Consequently, the content of Mn is 0.20 mass% or more and 2.00 mass% or less.

The content of Mn is preferably 0.50 mass% or more, more preferably 0.80 mass% or more, and still more preferably 1.20 mass% or more, from the viewpoint of improving the post-brazing strength. The content of Mn is preferably 1.85 mass% or less, and more preferably 1.65 mass% or less, from the viewpoint of preventing deterioration in the rollability.

### (Si in Core Material: 0.20 mass% or More and 1.50 mass% or Less)

Si improves post-brazing strength by being dissolved in a base metal or forming an Al-Mn-Si intermetallic compound together with Mn. In addition, Si improves the post-brazing strength together with Mg. In the case where the content of Si is less than 0.20 mass%, the effect of improving the strength is small. Meanwhile, when the content of Si exceeds 1.50 mass%, the solidus temperature decreases, and melting may occur during brazing.

Consequently, the content of Si is 0.20 mass% or more and 1.50 mass% or less.

The content of Si is preferably 0.30 mass% or more, more preferably 0.40 mass% or more, and still more preferably 0.50 mass% or more, from the viewpoint of improving the post-brazing strength. The content of Si is preferably 1.30 mass% or less, more preferably 1.20 mass% or less, and still more preferably 1.00 mass% or less, from the viewpoint of avoiding the occurrence of melting during brazing.

### (Cu in Core Material: 0.20 mass% or More and 1.50 mass% or Less)

Cu is dissolved in a matrix after brazing to improve the post-brazing strength. In the case where the content of Cu is less than 0.20 mass%, the effect of improving the strength is small. Meanwhile, when the content of Cu exceeds 1.50 mass%, the solidus temperature decreases, and melting may occur during brazing.

Consequently, the content of Cu is 0.20 mass% or more and 1.50 mass% or less.

The content of Cu is preferably 0.50 mass% or more, more preferably 0.60 mass% or more, and still more preferably 0.70 mass% or more, from the viewpoint of improving post-brazing strength. The content of Cu is preferably 1.20 mass% or less, more preferably 1.00 mass% or less, and still more preferably 0.90 mass% or less, from the viewpoint of avoiding the occurrence of melting during brazing.

### (Mg in Core Material: 0.10 mass% or More and 0.90 mass% or Less)

Mg improves post-brazing strength by interaction with Si. In the case where the content of Mg is less than 0.10 mass%, the effect of improving the strength is small. When the content of Mg in the core material is less than that in the intermediate material or the brazing filler material, since Mg in the intermediate material or the brazing filler material is diffused into the core material, the amount of Mg in both the intermediate material and the brazing filler material decreases, and thus brazing properties deteriorate. Meanwhile, when the content of Mg exceeds 0.90 mass%, erosion may occur and the strength and corrosion resistance may decrease.

Consequently, the content of Mg is 0.10 mass% or more and 0.90 mass% or less.

The content of Mg is preferably 0.20 mass% or more, and more preferably 0.30 mass% or more, from the viewpoint of preventing deterioration in the brazing properties. In addition, the content of Mg is preferably 0.80 mass% or less, more preferably 0.70 mass% or less, and still more preferably 0.50 mass% or less, from the viewpoint of preventing the occurrence of erosion.

### (Ti in Core Material: 0.30 mass% or Less)

As is generally common, since Ti is distributed in layers in an aluminum alloy, the potential distribution of a brazing sheet also corresponds to the density of Ti. Therefore, the corrosion form is layered and the rate of proceeding of corrosion in a sheet thickness direction can be reduced, which contributes to improvement of corrosion resistance. However, when the content of Ti exceeds 0.30 mass%, coarse Al₃Ti intermetallic compounds are likely to be formed during casting, and formability is reduced, and thus cracks are likely to be generated during tube forming.

Consequently, in a case where Ti is contained in the core material, the content of Ti is 0.30 mass% or less.

### (Cr in Core Material: 0.30 mass% or Less)

As is generally common, Cr and Al form Al₃Cr dispersed particles to perform dispersion strengthening, thereby improving post-brazing strength. However, when the content of Cr exceeds 0.30 mass%, a coarse Al₃Cr intermetallic compound is formed, and the rollability deteriorates.

Consequently, in a case where Cr is contained in the core material, the content of Cr is 0.30 mass% or less.

### (Zr in Core Material: 0.30 mass% or Less)

As is generally common, Zr and Al form Al₃Zr dispersed particles to perform dispersion strengthening, thereby improving post-brazing strength. However, when the content of Zr is more than 0.30 mass%, a coarse Al₃Zr intermetallic compound is formed, and formability is reduced, and thus cracks are likely to be generated during tube forming.

Consequently, in a case where Zr is contained in the core material, the content of Zr is 0.30 mass% or less.

As long as the contents of Ti, Cr, and Zr described above do not exceed the upper limit values described above, the effect of the present invention is not naturally impaired when one or more thereof are contained in the core material, that is, either only one of these or two or more thereof may be contained.

### (Remainder of Core Material: Al and Unavoidable Impurities)

The remainder of the core material of the brazing sheet in the present embodiment is Al and unavoidable impurities. The unavoidable impurities are impurities that are unavoidably mixed when raw materials are dissolved, and for example, V, Ni, Ca, Na, Sr, Li, Mo, Zn, Sn, and In may be contained as long as the effect of the present invention is not prevented thereby. Specifically, each of V, Ni, Ca, Na, Sr, Li, Mo, Zn, Sn, and In does not inhibit the effect of the present invention as long as the content thereof is within a range of 0.05 mass% or less. As long as the contents of these components do not exceed the given content, the inclusion of these components does not impair the effect of the present invention, regardless of whether these components are contained as unavoidable impurities or are added intentionally.

In addition, Ti, Cr, and Zr described above may also be contained as unavoidable impurities, and in this case, the content of each of Ti, Cr, and Zr is 0.1 mass% or less, and the total content thereof is 0.3 mass% or less, for example.

### [Intermediate Material]

The intermediate material of the brazing sheet in the present embodiment contains Zn and Mg, with the remainder being Al and unavoidable impurities.

The intermediate material of the brazing sheet in the present embodiment may further contain Bi, and may further contain one or more of Ti, Cr, and Zr.

### (Zn in Intermediate Material: 0.50 mass% or More and 8.00 mass% or Less)

Zn lowers the potential of the intermediate material, and improves the corrosion resistance (particularly, single-plate portion corrosion resistance). In the case where the content of Zn is less than 0.50 mass%, the sacrificial protection effect cannot be sufficiently obtained. Meanwhile, when the content of Zn exceeds 8.00 mass%, the solidus temperature of the intermediate material decreases, and thus the intermediate material may melt during brazing. Consequently, the content of Zn is 0.50 mass% or more and 8.00 mass% or less.

The content of Zn is preferably 1.00 mass% or more, more preferably 2.00 mass% or more, and still more preferably 3.00 mass% or more, from the viewpoint of improving corrosion resistance. In addition, the content of Zn is preferably 7.00 mass% or less, more preferably 6.00 mass% or less, and still more preferably 5.00 mass% or less, from the viewpoint of preventing the occurrence of melting.

### (Mg in Intermediate Material: 0.10 mass% or More and 0.90 mass% or Less)

Mg improves the post-brazing strength and prevents deterioration in the brazing properties due to diffusion of Mg from the brazing filler material to the intermediate material (reduction of Mg in the brazing filler material). In the case where the content of Mg is less than 0.10 mass%, the effect of improving the strength and the effect of preventing deterioration in the brazing properties are small. Meanwhile, when the content of Mg exceeds 0.90 mass%, erosion caused by a brazing filler becomes remarkable during brazing, and corrosion resistance decreases.

Consequently, the content of Mg is 0.10 mass% or more and 0.90 mass% or less.

The content of Mg is preferably 0.15 mass% or more, and more preferably 0.20 mass% or more, from the viewpoint of improving the post-brazing strength and from the viewpoint of preventing deterioration in the brazing properties. In addition, the content of Mg is preferably 0.70 mass% or less, more preferably 0.50 mass% or less, and still more preferably 0.40 mass% or less, from the viewpoint of improving corrosion resistance.

### (Bi in Intermediate Material: 0.10 mass% or More and 0.50 mass% or Less)

Bi improves the brazing properties. In the case where the content of Bi is less than 0.10 mass%, the effect of improving the brazing properties is small. Meanwhile, when the content of Bi exceeds 0.50 mass%, the effect of improving the brazing properties is saturated. Consequently, in a case where Bi is contained in the intermediate material, the content of Bi is 0.10 mass% or more and 0.50 mass% or less.

### (Ti, Cr, and Zr in intermediate material: 0.30 mass% or less)

Each of Ti, Cr, and Zr in the intermediate material exhibits the same behavior as that of Ti, Cr, and Zr in the core material described above, and in a case where these elements are contained in the intermediate material, the content of each of Ti, Cr, and Zr is 0.30 mass% or less.

As long as the contents of Ti, Cr, and Zr described above do not exceed the upper limit values described above, the effect of the present invention is not naturally impaired when one or more thereof are contained in the intermediate material, that is, either only one of these or two or more thereof may be contained.

### (Remainder in Intermediate Material: Al and Unavoidable Impurities)

The remainder of the intermediate material of the brazing sheet in the present embodiment is Al and unavoidable impurities. The unavoidable impurities are impurities that are unavoidably mixed when raw materials are dissolved, and for example, V, Ni, Ca, Na, Sr, Li, Mo, Zn, Sn, and In may be contained as long as the effect of the present invention is not prevented thereby.

Specifically, each of V, Ni, Ca, Na, Sr, Li, Mo, Zn, Sn, and In does not inhibit the effect of the present invention as long as the content thereof is within a range of 0.05 mass% or less. As long as the contents of these components do not exceed the given content, the inclusion of these components does not impair the effect of the present invention, regardless of whether these components are contained as unavoidable impurities or are added intentionally.

In addition, Bi, Ti, Cr, and Zr described above may also be contained as unavoidable impurities, and in this case, the content of each of Bi, Ti, Cr, and Zr is 0.1 mass% or less, and the total content thereof is 0.3 mass% or less, for example.

### [Brazing Filler Material]

The brazing filler material of the brazing sheet in the present embodiment contains Si, Mg, Bi, and Cu, with the remainder being Al and unavoidable impurities.

The brazing filler material of the brazing sheet in the present embodiment may further contain one or more of Mn and Ti.

### (Si in Brazing Filler Material: 5.00 mass% or more and 15.00 mass% or less)

Si in the brazing filler material improves the liquid phase rate at a temperature of heating for brazing, and exhibits an effect of ensuring an amount of molten brazing filler sufficient for forming a fillet. When the content of Si is less than 5.00 mass%, the amount of the molten brazing filler cannot be ensured, and the fluidity of the molten brazing filler is excessively lowered, and the brazing properties (gap filling properties) deteriorate. Meanwhile, when the content of Si exceeds 15.00 mass%, the fluidity of the molten brazing filler becomes too high, and erosion due to the molten brazing filler may occur.

Consequently, the content of Si is 5.00 mass% or more and 15.00 mass% or less.

In order to ensure the effect based on Si, the content of Si is preferably 6.00 mass% or more, more preferably 8.00 mass% or more, still more preferably 9.00 mass% or more, and yet still more preferably 10.00 mass% or more. In addition, the content of Si is preferably 13.00 mass% or less, and more preferably 12.00 mass% or less, from the viewpoint of preventing an increase in fluidity of the molten brazing filler.

### (Mg in Brazing Filler Material: 0.10 mass% or more and 0.90 mass% or less)

Mg in the brazing filler material evaporates into the atmosphere at the brazing-filler melting temperature during heating for brazing, and reacts with oxygen in the atmosphere. As a result, an oxide film formed on a surface of the brazing filler material is suitably destructed during evaporation of Mg, and the concentration of oxygen in the atmosphere is reduced to prevent re-oxidation of the molten brazing filler (getter action), thereby improving brazing properties. When the content of Mg is less than 0.10 mass%, the getter action becomes insufficient, and the brazing properties deteriorate. Meanwhile, when the content of Mg exceeds 0.90 mass%, the generation and growth of the MgO oxide film are promoted during rising temperature in the brazing, and the brazing properties deteriorate.

Consequently, the content of Mg is 0.10 mass% or more and 0.90 mass% or less.

In order to ensure the effect based on Mg, the content of Mg is preferably 0.20 mass% or more, and more preferably 0.25 mass% or more. In addition, the content of Mg is preferably 0.80 mass% or less, more preferably 0.50 mass% or less, and still more preferably 0.35 mass% or less, from the viewpoint of preventing the growth of the MgO oxide film.

### (Bi in Brazing Filler Material: 0.10 mass% or more and 0.50 mass% or less)

Bi in the brazing filler material reacts with Mg to generate a chemical compound containing Mg and Bi that hardly dissolves at a temperature equal to or lower than the brazing-filler melting temperature. As a result, diffusion of Mg into a surface-layer portion of the brazing filler material is prevented in a process of raising temperature to a temperature at which a brazing filler starts melting during heating for brazing, and generation and growth of MgO on the surface of the brazing filler material are prevented (trapping action of Mg). At the brazing-filler melting temperature during heating for brazing, the chemical compound containing Mg and Bi is dissolved in the matrix (brazing filler material), so that evaporation of Mg is promoted. As a result, the oxide film formed on the surface of the brazing filler material is suitably destructed during evaporation of Mg, and Mg reacts with oxygen in the atmosphere to reduce the concentration of oxygen in the atmosphere, thereby improving the action of preventing re-oxidation of the molten brazing filler (getter action) and improving the brazing properties. When the content of Bi is less than 0.10 mass%, the brazing properties deteriorate. Meanwhile, when the content of Bi exceeds 0.50 mass%, the effect is saturated. Consequently, the Bi content is 0.10 mass% or more and 0.50 mass% or less.

In order to ensure the effect based on Bi, the content of Bi is preferably 0.20 mass% or more. The content of Bi is preferably 0.40 mass% or less, and more preferably 0.30 mass% or less.

### (Cu in Brazing Filler Material: 0.05 mass% or more and 0.50 mass% or less)

Cu in the brazing filler material improves the corrosion resistance of a fillet portion formed in the case of applying the heating for brazing (fillet portion corrosion resistance). In the case where the content of Cu is less than 0.05 mass%, the effect of improving corrosion resistance is small. Meanwhile, when the content of Cu exceeds 0.50 mass%, Cu diffuses into the intermediate material during heating for brazing, and the corrosion resistance of a single plate (single-plate portion corrosion resistance) in the case of applying the heating for brazing and the corrosion resistance of a surface of a clad material (surface of a brazing sheet) between fins may decrease.

Consequently, the content of Cu is 0.05 mass% or more and 0.50 mass% or less.

The content of Cu is preferably 0.08 mass% or more, more preferably 0.09 mass% or more, and still more preferably 0.10 mass% or more, from the viewpoint of improving fillet portion corrosion resistance. In addition, the content of Cu is preferably 0.40 mass% or less, more preferably 0.38 mass% or less, and still more preferably 0.36 mass% or less, from the viewpoint of preventing a decrease in the single-plate portion corrosion resistance.

### (Mn in Brazing Filler Material: 0.30 mass% or less)

As is generally common, Mn in the brazing filler material improves the viscosity of a molten brazing filler and prevents the flow of the molten brazing filler. However, when the content of Mn exceeds 0.30 mass%, a chemical compound containing Al and Mn (and Fe and Si) having a large specific gravity is generated in the molten brazing filler, and the amount of the molten brazing filler flowing downward in the vertical direction increases.

Consequently, in a case where Mn is contained in the brazing filler material, the content of Mn is 0.30 mass% or less.

In order to ensure the effect of preventing the flow of the molten brazing filler based on Mn, the content of Mn is preferably 0.05 mass% or more, and more preferably 0.10 mass% or more. In addition, the content of Mn is preferably 0.25 mass% or less from the viewpoint of not reducing the effect of preventing the flow of the molten brazing filler.

### (Ti in Brazing Filler Material: 0.30 mass% or less)

As is generally common, Ti in the brazing filler material improves the viscosity of a molten brazing filler and prevents the flow of the molten brazing filler. However, when the content of Ti exceeds 0.30 mass%, a chemical compound containing Al and Ti having a large specific gravity is generated in the molten brazing filler, and the amount of the molten brazing filler flowing downward in the vertical direction increases.

Consequently, in a case where Ti is contained in the brazing filler material, the content of Ti is 0.30 mass% or less.

In order to ensure the effect of preventing the flow of the molten brazing filler based on Ti, the content of Ti is preferably 0.05 mass% or more, and more preferably 0.10 mass% or more. In addition, the content of Ti is preferably 0.20 mass% or less from the viewpoint of not reducing the effect of preventing the flow of the molten brazing filler.

As long as the contents of Mn and Ti described above do not exceed the upper limit values described above, the effect of the present invention is not naturally impaired when one or more thereof are contained in the brazing filler material, that is, either only one of these or two or more thereof may be contained.

### (Remainder in Brazing Filler Material: Al and Unavoidable Impurities)

The remainder in the brazing filler material is Al and unavoidable impurities. As the unavoidable impurities in the brazing filler material, Ca, Be, Sr, Na, Sb, rare earth elements, Li, and the like may be contained as long as the effect of the present invention is not prevented thereby. Specifically, Ca may be contained within a range of 0.05 mass% or less, Be may be contained within a range of 0.01 mass% or less, and other elements may be contained within a range of less than 0.01 mass%.

As long as the contents of these elements do not exceed the given content, the inclusion of these elements does not impair the effect of the present invention and is acceptable, regardless of whether these elements are contained as unavoidable impurities or are added intentionally. In addition, Mn and Ti described above may also be contained as unavoidable impurities, and in this case, the content of each of Mn and Ti is 0.05 mass% or less, and the total content thereof is 0.15 mass% or less, for example.

The present inventors have studied various compositions in order to obtain excellent corrosion resistance of the brazing sheet, specifically, both fillet portion corrosion resistance and single-plate portion corrosion resistance at an excellent level, and as a result, the present inventors have found that a relationship between the content of Zn in the intermediate material and the content of Cu in the brazing filler material has a large influence on the corrosion resistance. Hereinafter, the relationship between Zn in the intermediate material and Cu in the brazing filler material will be described.

### ([Zn]/[Cu])

Zn in the intermediate material and Cu in the brazing filler material greatly affect the corrosion resistance of the brazing sheet. When a value calculated by [Zn]/[Cu] is less than 10.0, in which [Zn] is the content of Zn in the intermediate material in mass% and [Cu] is the content of Cu in the brazing filler material in mass%, a large amount of Cu contained in the brazing filler material diffuses into the intermediate material during heating for brazing, and thus an excessive amount of Cu that cannot be cancelled out by Zn that is contained in the intermediate material and lowers the potential, and the intermediate material becomes noble. As a result, the corrosion resistance of a single plate (single-plate portion corrosion resistance) in the case of applying the heating for brazing may decrease.

In addition, when the value calculated by [Zn]/[Cu] exceeds 40.0, a large amount of Zn contained in the intermediate material diffuses into the brazing filler material during heating for brazing, and thus an excessive amount of Zn, which cannot be canceled out by Cu that is contained in the brazing filler material and ennobles the potential, is contained in the fillet portion. As a result, the corrosion resistance of the fillet portion (fillet portion corrosion resistance) may decrease.

Consequently, the value calculated by [Zn]/[Cu] is 10.0 or more and 40.0 or less (10.0 ≤ [Zn]/[Cu] ≤ 40.0).

In order to further improve the single-plate portion corrosion resistance, the value calculated by [Zn]/[Cu] is preferably 11.0 or more, more preferably 12.0 or more, and still more preferably 12.8 or more. In order to further improve the fillet portion corrosion resistance, the value calculated by [Zn]/[Cu] is preferably 37.0 or less, more preferably 36.0 or less, still more preferably 30.0 or less, and yet still more preferably 20.0 or less.

### [Thickness of Aluminum Alloy Brazing Sheet]

The thickness of the brazing sheet in the present embodiment is not particularly limited, and in the case of application to tube materials, the thickness is preferably 0.5 mm or less, more preferably 0.4 mm or less, and is preferably 0.05 mm or more.

In the case of application to side support materials, header materials, or tank materials, the thickness of the brazing sheet in the present embodiment is preferably 2.0 mm or less, more preferably 1.5 mm or less, and is preferably 0.5 mm or more.

In the case of application to fin materials, the thickness of the brazing sheet in the present embodiment is preferably 0.2 mm or less, more preferably 0.15 mm or less, and is preferably 0.01 mm or more.

From the viewpoint of ensuring a proper brazing filler material thickness without impairing the basic properties such as post-brazing strength, the thickness of the brazing sheet in the present embodiment is particularly preferably 0.05 mm or more.

### [Cladding Ratio]

When the cladding ratio of the intermediate material of the brazing sheet according to the present embodiment (a ratio of the thickness of the intermediate material in a case where the total thickness of the brazing sheet is considered as 100%) is less than 12%, corrosion resistance (single-plate portion corrosion resistance) may decrease. Meanwhile, when the cladding ratio of the intermediate material exceeds 30%, the pressure bonding property may deteriorate, and the production may be difficult.

Consequently, the cladding ratio of the intermediate material is preferably 12% or more and 30% or less, and more preferably 18% or more and 25% or less.

The cladding ratio of the brazing filler material of the brazing sheet in the present embodiment is not particularly limited, but is, for example, preferably 5% or more and 25% or less, and more preferably 8% or more and 20% or less.

### [Application]

The brazing sheet in the present embodiment can be used for, for example, a member of a heat exchanger for an automobile, such as a tube material of a radiator.

### [Other Configurations of Aluminum Alloy Brazing Sheet]

The brazing sheet in the present embodiment was described above using the three-layer configuration shown in FIG. 1 as an example. However, this does not exclude other configurations.

For example, the configuration of the brazing sheet in the present embodiment can be modified, in accordance with the desire of the user, by disposing a brazing filler material or an intermediate material and a brazing filler material on the other side of the core material 1 shown in FIG. 1 (i.e., on the side opposite to the side where the intermediate material 2 and the brazing filler material 3 has been disposed).

In the case where the brazing sheet in the present embodiment has a configuration which includes brazing filler materials and intermediate materials disposed respectively on both sides of the core material, as long as the brazing filler material and intermediate material in any one side satisfy the requirements of the present invention, the brazing filler material and intermediate material in the other side may not satisfy the requirements of the present invention. Regarding the brazing filler material which does not satisfy the requirements of the present invention, a flux may be applied to the surface of the brazing filler material before the brazing sheet is subjected to brazing.

Next, a brazing method for an aluminum alloy brazing sheet in the present embodiment is described.

### [Brazing Method for Aluminum Alloy Brazing Sheet]

The brazing method for the aluminum alloy brazing sheet in the present embodiment is the so-called flux-less brazing, in which no flux is used. In this method, the brazing sheet is heated in an inert gas atmosphere under given thermal conditions.

### (Heating Conditions: Temperature-rising Rate)

When the brazing sheet in the present embodiment is heated (brazed), in the case where the rising rate of temperature from 350°C to 560°C is less than 1°C/min, it becomes likely to occur that Mg in the brazing filler material diffuses excessively to a surface-layer portion of the brazing filler material during this temperature rising process to generate MgO in the surface of the brazing filler material, and this may result in deterioration in brazing properties. Meanwhile, when the rising rate of temperature from 350°C to 560°C exceeds 500°C/min, it becomes likely to occur that Mg in the brazing filler material does not properly diffuse to a surface-layer portion of the brazing filler material and getter action is insufficient, and this may result in deterioration in brazing properties.

Consequently, the rising rate of temperature from 350°C to 560°C is preferably 1°C/min or more and 500°C/min or less.

In order to further reduce the possibility of MgO being generated in the surface of the brazing filler material, the rising rate of temperature from 350°C to 560°C is preferably 10°C/min or more. In order to more reliably perform the getter action, the rising rate of temperature from 350°C to 560°C is preferably 300°C/min or less.

Meanwhile, the lowering rate of temperature from 560°C is not particularly limited, and may be, for example, 5°C/min or more and 1,000°C/min or less.

Although the rising rate of temperature from 560°C to an actual heating temperature (a given maximum temperature within the heating-temperature range which will be described later) is not particularly limited, the rate may be in the same range as the rising rate of temperature from 350°C to 560°C. Meanwhile, the lowering rate of temperature from the actual heating temperature to 560°C is also not particularly limited, and may be in the same range as the lowering rate of temperature from 560°C.

### (Heating Conditions: Heating Temperature, Holding Period)

The heating temperature (brazing-filler melting temperature) in heating the brazing sheet in the present embodiment is 560°C or more and 620°C or less, at which the brazing filler material melts properly, and is preferably 580°C or more and 620°C or less. When the period of holding the brazing sheet at a temperature within that range is shorter than 10 seconds, the time required for causing the brazing phenomena (destruction of an oxide film, decrease in the oxygen concentration of the atmosphere, and flow of the molten brazing filler to portions to be joined) to occur might not be ensured.

Consequently, the holding period in heating at a temperature in the range from 560°C to 620°C (preferably at a temperature in the range from 580°C to 620°C) is preferably 10 seconds or longer.

In order to cause the brazing phenomena to occur more reliably, the holding period in heating at a temperature in the range from 560°C to 620°C (preferably at a temperature in the range from 580°C to 620°C) is preferably 30 seconds or longer, more preferably 60 seconds or longer. Meanwhile, there is no limitation about an upper limit on the holding period particularly, but the holding period may be 1,500 seconds or shorter.

### (Inert Gas Atmosphere)

The atmosphere in which the brazing sheet in the present embodiment is heated (brazed) is an inert gas atmosphere. For example, the atmosphere is a nitrogen gas atmosphere, an argon gas atmosphere, a helium gas atmosphere, or a mixed-gas atmosphere obtained by mixing two or more of these gases. The inert gas atmosphere is preferably an atmosphere having an oxygen concentration which is as low as possible. Specifically, the oxygen concentration is preferably 50 ppm or less, more preferably 10 ppm or less.

The brazing method for the aluminum alloy brazing sheet in the present embodiment can be carried out at ordinary pressure (atmospheric pressure), without the need of making the atmosphere vacuum.

Usually, members to be joined are assembled (assembly step) so as to come into contact with the brazing filler material of the brazing sheet in the present embodiment, before the brazing sheet is subjected to the heating (brazing step). Before the assembly step, the brazing sheet may be formed into a desired shape or structure (forming step).

The product obtained through the brazing step is the "aluminum alloy brazed body" (a structure obtained by brazing the members to be joined to the brazing sheet) in the present embodiment.

The brazing method for the brazing sheet in the present embodiment is as described above. Conditions which were not shown above may be the same as common ones. It is a matter of course that the conditions can be suitably modified as long as the effects of the treatment can be obtained.

Next, a method for producing the aluminum alloy brazing sheet in the present embodiment is described.

### [Method for Producing Aluminum Alloy Brazing Sheet]

A method for producing the brazing sheet in the present embodiment is not particularly limited. For example, the brazing sheet is produced by a common production method for clad materials. An example thereof is described below.

First, aluminum alloys respectively having the compositions of the core material, the intermediate material, and brazing filler material are melted and cast and are then subjected, depending on need, to scalping (surface smoothing treatment of slab) and a homogenizing treatment, thereby obtaining respective slabs. Then, the slabs of the intermediate material and the brazing filler material are subjected to hot rolling or mechanical slicing to a given thickness, and are then combined with the slab of the core material and hot-rolled by an ordinary method to obtain a clad material. Thereafter, this clad material is cold-rolled and subjected, depending on need, to process annealing and final cold-rolling, and is subjected, depending on need, to final annealing.

The homogenizing treatment is conducted preferably at 400°C to 610°C for 1 to 20 hours, and the process annealing is conducted preferably at 200°C to 450°C for 1 to 20 hours. The final annealing is conducted preferably at 150°C to 450°C for 1 to 20 hours. In the case of conducting the final annealing, the process annealing can be omitted. Temper treatment of any of H1n, H2n, and H3n (JIS H 0001:1998) may be performed.

A method for producing the aluminum alloy brazing sheet in the present embodiment is as described above. Conditions for each step which were not shown above may be the same as common ones. It is a matter of course that the conditions can be suitably modified as long as the effects of the treatment in each step can be achieved.

### [EXAMPLES]

Next, the aluminum alloy brazing sheet in the present invention is described in detail by comparing Examples which satisfy the requirements in the present invention, and Comparative Examples which do not satisfy the requirements in the present invention.

### [Production of Specimens]

Core materials having the compositions shown in Table 1 were produced by casting, followed by subjecting the core materials to a homogenizing treatment of 550°C × 5 hr. and to scalping both surfaces to a given thickness. Intermediate materials having the compositions shown in Table 1 were produced by casting, followed by subjecting the intermediate materials to a homogenizing treatment of 500°C × 3 hr. and then hot-rolled to a given thickness. Brazing filler materials having the compositions shown in Table 1 were produced by casting, followed by subjecting the brazing filler materials to a homogenizing treatment of 500°C × 3 hr. and then hot-rolled to a given thickness. In addition, a brazing filler material X containing 9.62 mass% of Si, 0.10 mass% of Mg, 0.07 mass% of Bi, and the remainder of A1 and unavoidable impurities was cast, and was subjected to a homogenizing treatment of 500°C × 3 hr. and then hot-rolled to a given thickness.

Then, the intermediate material and the brazing filler material shown in Table 1 were combined on one surface of the core material shown in Table 1, and the brazing filler material X was combined on the other surface of the core material, and hot rolling was conducted to obtain a clad material (the brazing filler material in Table 1-the intermediate material in Table 1-the core material in Table 1-the brazing filler material X). Thereafter, cold rolling, process annealing of 400°C × 3 hr., and finish rolling were conducted to produce a brazing sheet having a four-layer structure, which was used as a specimen.

The cladding ratios of the intermediate materials and the brazing filler materials in the specimens were shown in Table 1. The thickness of the brazing filler material X in each of the specimens 1 to 6 was 15 µm, the thickness of the brazing filler material X in the specimen 7 was 17 µm, and the total thickness of the specimens was about 200 µm.

Next, shown below are the conditions for brazing-corresponding heating, and evaluation methods and evaluation criteria for evaluation of single-plate portion corrosion resistance and evaluation of fillet portion corrosion resistance.

### [Brazing-Corresponding Heating]

Brazing-corresponding heating was conducted in a nitrogen atmosphere with an oxygen concentration of 50 ppm or less under the conditions of a period of holding at temperatures of 575°C to 600°C of 180 seconds.

The temperature dropping rate was 100°C/min.

### [Evaluation of Single-Plate Portion Corrosion Resistance]

First, each specimen (80 mm × 40 mm) produced by the method described above was subjected to the brazing-corresponding heating described above, and was sealed so that one surface of the core material (the surface where the brazing filler material and the intermediate material shown in Table 1 were formed) served as an evaluation surface. Specifically, a part (70 mm × 30 mm) of one surface of the core material was exposed as an evaluation surface by attaching a seal to the other part, thereby preparing a test piece.

Next, this test piece was immersed in a corrosion test solution A of 40°C for 3 hours. The corrosion test solution A is a solution obtained by adding a small amount of Na₂SO₄ and a small amount of Cu²⁺ for promoting corrosion to a 1% NaCl solution as a base.

The spraying with a corrosion test solution B, drying, and wetting were performed for 3 hours on the test piece after immersion. The three-hour treatment was defined as one cycle, and the cycle treatment was performed for 810 hours or 1,500 hours. The corrosion test solution B was a solution containing a small amount of Na₂SO₄ in a 0.5% NaCl solution of a base, and was adjusted to be acidic with acetic acid.

The test piece after the cycle treatment was washed with water using a bristle brush to remove corrosion products, followed by pickling (30% HNO₃ × 10 minutes), and was washed with water using the bristle brush again.

The presence or absence of penetration was checked for the test piece subjected to the cycle treatment for 810 hours. For the test piece subjected to the cycle treatment for 1,500 hours, the presence or absence of penetration was checked, and the cross-section remaining thickness and the depth of corrosion in the cross section were measured.

Regarding the presence or absence of penetration, the presence or absence of penetration was determined by visually checking the test piece. A test piece in which penetration did not occur was evaluated as "∘", and a test piece in which penetration occurred was evaluated as "x". Regarding the remaining thickness of the cross section, first, a deep corroded portion in the test piece was picked up by a depth of focus method, and a cross section of the corroded portion was polished to prepare a measurement sample. Then, the minimum remaining thickness in the corroded portion was measured, and the obtained minimum remaining thickness was defined as the cross-section remaining thickness.

The depth of corrosion in the cross section was calculated by "180 (µm) - cross-section remaining thickness (µm)" in consideration of the thickness of each test piece (thickness after brazing-corresponding heating and before cycle treatment: 180 µm).

Regarding the single-plate portion corrosion resistance, a test piece was determined to be "excellent", which was evaluated to be "o" in terms of the presence or absence of penetration after 810 hours and 1,500 hours (no penetration occurred) and which had a cross-section remaining thickness of 100 µm or more (the depth of corrosion in the cross section was 80 µm or less), and a test piece which did not satisfy the above conditions was determined to be "not excellent".

### [Evaluation of Fillet Portion Corrosion Resistance]

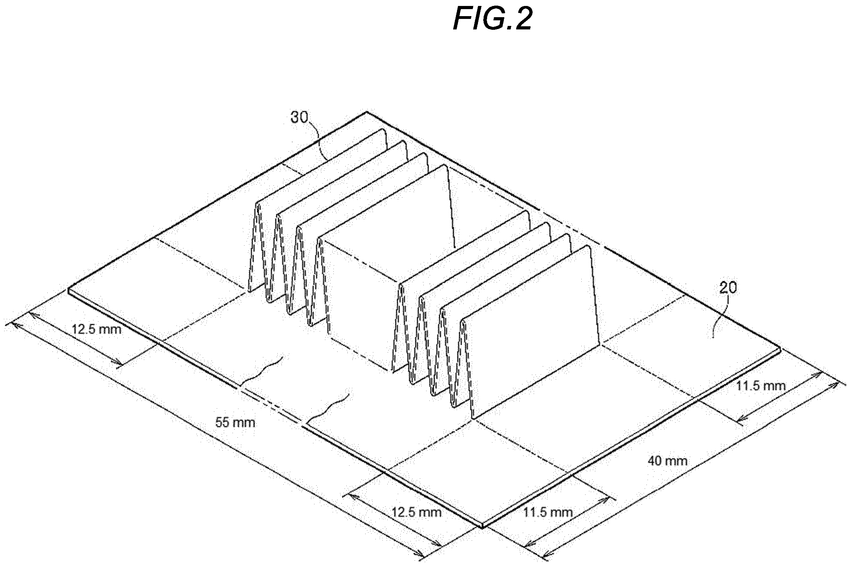

First, as shown in FIG. 2, a fin 30 was assembled to one surface (the surface on which the brazing filler material and the intermediate material in Table 1 were formed) of a core material of each specimen 20 (55 mm × 40 mm) produced by the method described above, followed by conducting the brazing-corresponding heating, and a test body was produced. As the fin 30, an alloy plate containing 1.2 mass% of Zn in an alloy of alloy number 3003 defined in JIS H4000: 2014 was used.

Next, a SWAAT test in accordance with ASTM-G85-A3 was conducted on the test body. Specifically, a corrosion test solution C was sprayed to the test body for 0.5 hours (49°C ± 2°C, spray amount: 1.0 to 2.0 ml/h), and the test body was placed in a wet environment (49°C ± 2°C × 98% RH or more) for 1.5 hours. The two-hour treatment was defined as one cycle, and the cycle treatment was performed for 55 days. The corrosion test solution C was prepared by adjusting the pH of artificial seawater of ASTM D1141 to 2.8 to 3.0 with acetic acid and 10% NaOH.

Then, the specimen after the cycle treatment was washed with water using a bristle brush to remove corrosion products, followed by pickling (30% HNO₃ × 10 minutes), and was washed with water using the bristle brush again.

In the case where the fin adhered to the specimen after the cycle treatment, the fin was removed, and then the above-described washing with water and the like were conducted.

The surface of the specimen after being washed with water was visually checked, and the case where a fillet portion formed on a surface of a specimen remained without unstacking at all was evaluated as "no unstacking: ∘", the case where a part of a fillet portion unstacked was evaluated as "partial unstacking: Δ", and the case where the whole fillet portion unstacked was evaluated as "full unstacking: x".

Regarding the fillet portion corrosion resistance, a specimen which was given the evaluation of "no unstacking: o" or "partial unstacking: Δ" was determined to be "excellent", and a specimen which was given the evaluation of "full unstacking: x" was determined to be "not excellent".

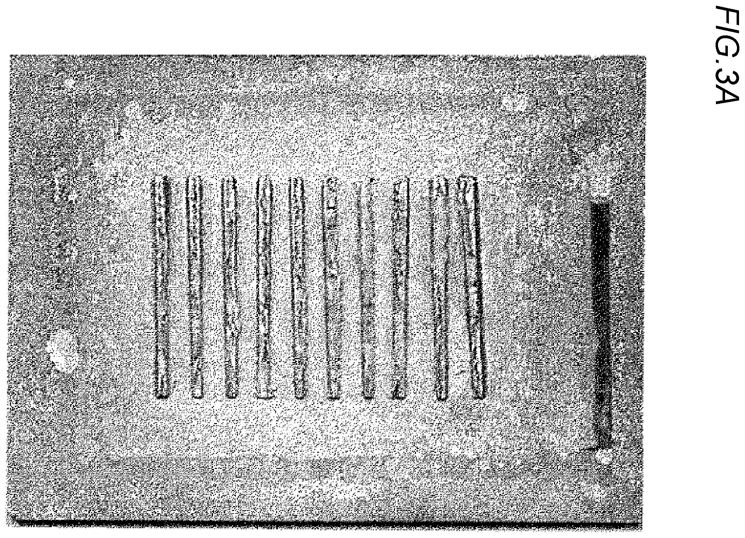

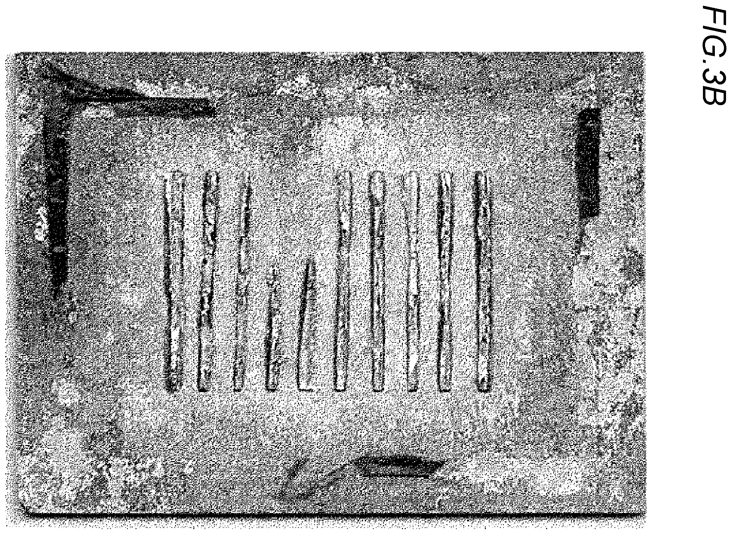

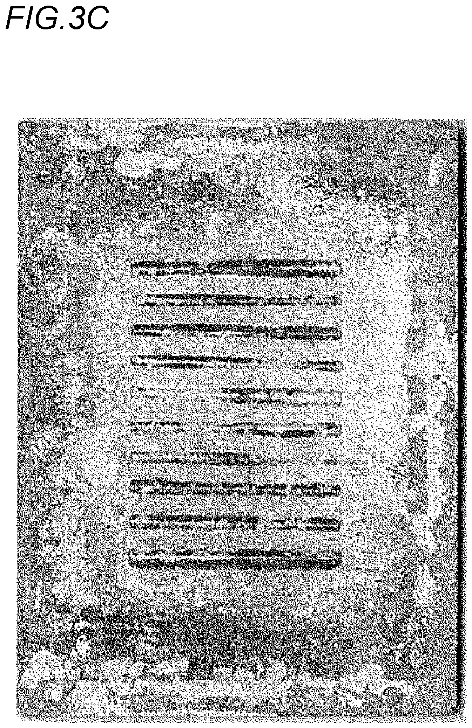

Note that "no unstacking: o" is a state for example, as indicated by a surface of a specimen 5 in FIG. 3A, "partial unstacking: Δ" is a state for example, as indicated by a surface of a specimen 2 in FIG. 3B, and "full unstacking: x" is a state for example, as indicated by a surface of a specimen 7 in FIG. 3C.

The components, configurations, and evaluation results of the specimens are shown in Table 1. In Table 1, numerical values that do not satisfy the requirements of the present invention are underlined.

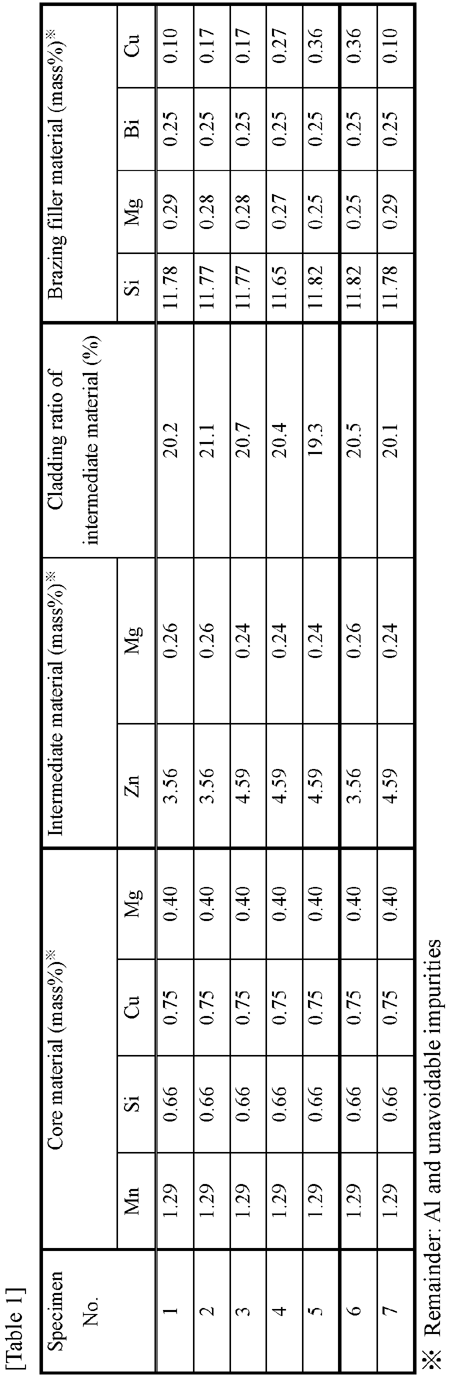

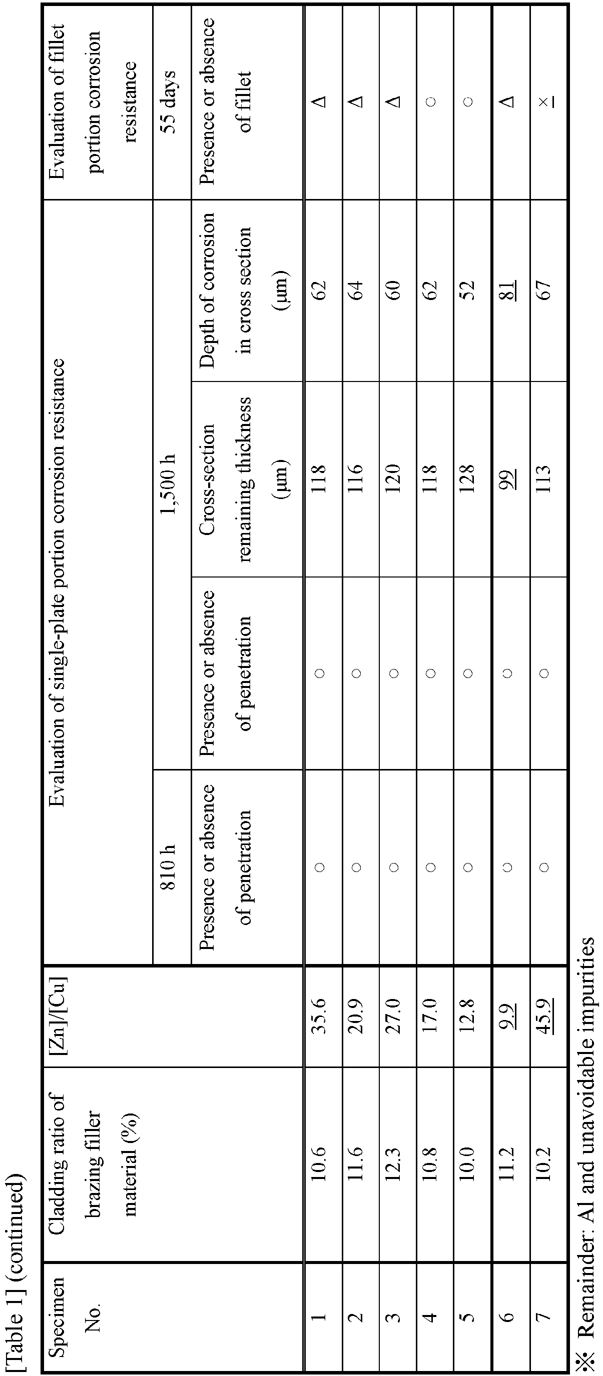

### [Examination of Results]

As shown in Table 1, the test specimens No. 1 to No. 5 satisfy the component compositions specified in the present invention.

Since the specimens No. 1 to No. 5 satisfied the component compositions specified in the present invention, the results of "excellent" in both the single-plate portion corrosion resistance and the fillet portion corrosion resistance were obtained.

In contrast, since the value of [Zn]/[Cu] was less than the given value, specimen No. 6 gave results in which the cross-section remaining thickness was small, the corrosion depth in cross section was large, and the single-plate portion corrosion resistance was not excellent. Since the value of [Zn]/[Cu] exceeded the given value, specimen No. 7 gave results in which the fillet portion entirely unstacked, and the fillet portion corrosion resistance was not excellent.

Although various embodiments have been described above with reference to the drawings, it is needless to say that the present invention is not limited to these examples. It is apparent that those skilled in the art can conceive of various modifications and alterations within the scope described in the claims, and it is understood that such modifications and alterations naturally fall within the technical scope of the present invention. In addition, the respective constituent elements in the above-described embodiments may be freely combined without departing from the gist of the present invention.

The present application is based on Japanese Patent Application No. 2020-099534 filed on June 8, 2020, the contents of which are incorporated herein by reference.

### REFERENCE SIGNS LIST

1 Core material
2 Intermediate material
3 Brazing filler material
10 Aluminum alloy brazing sheet

## Claims

1. An aluminum alloy brazing sheet comprising:
a core material;
a brazing filler material provided on one surface of the core material; and
an intermediate material provided between the core material and the brazing filler material,
wherein the core material contains
Mn: 0.20 mass% or more and 2.00 mass% or less,
Si: 0.20 mass% or more and 1.50 mass% or less,
Cu: 0.20 mass% or more and 1.50 mass% or less, and
Mg: 0.10 mass% or more and 0.90 mass% or less, with the remainder being Al and unavoidable impurities,
the intermediate material contains
Zn: 0.50 mass% or more and 8.00 mass% or less, and
Mg: 0.10 mass% or more and 0.90 mass% or less, with the remainder being Al and unavoidable impurities,
the brazing filler material contains
Si: 5.00 mass% or more and 15.00 mass% or less,
Mg: 0.10 mass% or more and 0.90 mass% or less,
Bi: 0.10 mass% or more and 0.50 mass% or less, and
Cu: 0.05 mass% or more and 0.50 mass% or less, with the remainder being Al and unavoidable impurities, and
a relational expression of 10.0 ≤ [Zn]/[Cu] ≤ 40.0 is satisfied, in which [Zn] is the content of Zn in the intermediate material in mass%, and [Cu] is the content of Cu in the brazing filler material in mass%.

2. The aluminum alloy brazing sheet according to claim 1, wherein the intermediate material further contains Bi: 0.10 mass% or more and 0.50 mass% or less.

3. The aluminum alloy brazing sheet according to claim 1 or 2, wherein the intermediate material has a cladding ratio of 12.0% or more and 30.0% or less.

4. The aluminum alloy brazing sheet according to claim 1 or 2, wherein the brazing filler material further contains one or more of Mn: 0.30 mass% or less and Ti: 0.30 mass% or less.

5. The aluminum alloy brazing sheet according to claim 1 or 2, wherein at least one of the core material or the intermediate material further contains at least one of Ti: 0.30 mass% or less, Cr: 0.30 mass% or less, and Zr: 0.30 mass% or less.

6. An aluminum alloy brazed body obtained by brazing the aluminum alloy brazing sheet according to claim 1 or 2.
